**Europäisches Patentamt**

**European Patent Office**

**Office européen des brevets**

(11) Veröffentlichungsnummer: **0 182 833**
**B1**

(12) # EUROPÄISCHE PATENTSCHRIFT

(45) Veröffentlichungstag der Patentschrift:
**24.02.88**

(51) Int. Cl.⁴: **B 23 B  13/12**

(21) Anmeldenummer: **85902520.7**

(22) Anmeldetag: **14.05.85**

(86) Internationale Anmeldenummer:
**PCT/EP 85/00224**

(87) Internationale Veröffentlichungsnummer:
**WO 85/05300 (05.12.85 Gazette 85/26)**

(54) **FÜHRUNGS- UND VORSCHUBVORRICHTUNG FÜR EINE WERKSTOFFSTANGE AN EINER DREHMASCHINE.**

(30) Priorität: **24.05.84  DE 3419417**

(43) Veröffentlichungstag der Anmeldung:
**04.06.86 Patentblatt 86/23**

(45) Bekanntmachung des Hinweises auf die Patenterteilung:
**24.02.88 Patentblatt 88/8**

(84) Benannte Vertragsstaaten:
**AT BE CH DE FR GB IT LI NL SE**

(56) Entgegenhaltungen:
**FR-A-2 276 128**
**GB-A-691 087**
**US-A-1 356 311**
**US-A-2 639 494**
**US-A-4 130 289**

(73) Patentinhaber: **TRAUB Aktiengesellschaft, Ulmer Strasse 49- 55, D-7313 Reichenbach/Fils (DE)**

(72) Erfinder: **HASSLAUER, Heinz,**
**Brunnenwiesenstrasse 1, D-7336 Uhingen (DE)**
Erfinder: **GAWRONSKI, Seweryn, Forststrasse 26,**
**D-7300 Esslingen (DE)**

(74) Vertreter: **Wuesthoff, Franz, Dr.- Ing.,**
**Patentanwälte Wuesthoff -v. Pechmann-**
**Behrens- Goetz Schweigerstrasse 2, D-8000**
**München 90 (DE)**

EP 0 182 833 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

     2

## Beschreibung

Die Erfindung betrifft eine Drehmaschine mit einer Führungs- und Vorschubvorrichtung für eine Werkstoffstange an einer Drehmaschine mit

- einer hohlen Arbeitsspindel, die an einem Ende eine Spannvorrichtung und in Abständen dahinter mindestens zwei Führungsbüchsen für die Werkstoffstange enthält, und

- einem Werkstoffschieber zum Vorschieben der Werkstoffstange in Richtung zur Spannvorrichtung.

Bei bekannten Führungsvorrichtungen dieser Gattung (Zeitschrift "tz für Metallbearbeitung" Nr. 5/83 und Nr. 6/83) sind innerhalb der Arbeitsspindel drei Führungsbüchsen ortsfest angeordnet, davon die erste unmittelbar hinter der Spannvorrichtung und die zwei weiteren in gleichmäßigen Abständen dahinter. Die Führungsbüchsen haben einen Innendurchmesser, der an den Außendurchmesser der zu verarbeitenden Werkstoffstange eng angepaßt ist. Hinter der Arbeitsspindel ist ein Stangenmagazin mit mehreren Rollensätzen angeordnet, zwischen denen die Werkstoffstange drehbar gelagert ist. Dem Stangenmagazin ist ein teleskopartiger Werkstoffschieber zugeordnet, der gleichachsig mit der Werkstoffstange hinter dieser angeordnet ist und einen axial verschiebbaren, rohrförmigen Außenschieber sowie einen in diesem axial verschiebbar geführten, stangenförmigen Innenschieber aufweist. Der Durchmesser des Innenschiebers ist kleiner als der Durchmesser der Werkstoffstange.

Wenn bei dieser bekannten Anordnung eine neue Werkstoffstange von hinten her in die Arbeitsspindel und deren Führungsbüchsen sowie in die Spannvorrichtung eingeführt wird, ist das hintere Ende der Werkstoffstange am vorderen Ende des Außenschiebers abgestützt und zentriert gehalten. Im Betrieb der Drehmaschine wird die Werkstoffstange vom Werkstoffschieber schrittweise vorwärtsgeschoben, wobei sich Außen- und Innenschieber solange gemeinsam bewegen, bis das vordere Ende des Außenschiebers eine Stellung in geringem Abstand hinter der hintersten Führungsbüchse der Arbeitsspindel erreicht hat. Eine weitere Vorwärtsbewegung des Außenschiebers ist nicht möglich, da dessen Außendurchmesser größer ist als der Innendurchmesser der Führungsbüchsen. Für die weitere Vorwärtsbewegung der Werkstoffstange sorgt der Innenschieber, der nun gegenüber dem Außenschieber vorwärtsgeschoben wird und dabei nacheinander in die Führungsbüchsen und schließlich in die Spannvorrichtung eindringt, bis die Werkstoffstange vollständig verarbeitet und ihr gegebenenfalls übrigbleibender Rest vom Innenschieber durch die Spannvorrichtung hindurch nach vorne ausgestoßen worden ist.

Die Führungsbüchsen sind auswechselbar, damit in jedem Fall solche Führungsbüchsen verwendet werden können, deren Innendurchmesser dem Durchmesser der Werkstoffstange eng angepaßt ist. Der Werkstoffschieber, insbesondere dessen Innenschieber, wird jedoch unverändert für Werkstoffstangen unterschiedlichen Durchmessers verwendet, da es zu kostspielig wäre, den Werkstoffschieber bei jedem Wechsel des Werkstoffdurchmessers umzubauen. Deshalb kann der Außendurchmesser des Innenschiebers normalerweise dem Innendurchmesser der Führungsbüchsen in der Arbeitsspindel nicht eng angepaßt sein; infolgedessen hat der Innenschieber in den Führungsbüchsen ein mehr oder weniger großes radiales Spiel. Entsprechendes gilt auch für den Fall, daß der Werkstoffschieber nicht teleskopartig ausgebildet ist, sondern nur eine einzige, in die Führungsbüchsen einschiebbare und zu diesem Zweck entsprechend schlanke Stange aufweist.

In beiden Fällen sind an den Werkstoffdurchmesser angepaßte Führungsbüchsen nicht imstande, den Werkstoffschieber mit ebenso geringem Radialspiel zu führen wie die Werkstoffstange. Der in die Führungsbüchsen eingedrungene vordere Abschnitt des Werkstoffschiebers neigt infolgedessen zu einer gewissen Exzentrizität innerhalb der Arbeitsspindel mit der Folge, daß er im Betrieb Schwingungen hervorruft. Diese Schwingungen können in bestimmten Drehzahlbereichen, welche die Arbeitsspindel zu durchlaufen hat, so stark werden, daß sie sich nachteilig auf die Qualität der Werkstückbearbeitung auswirken.

Verzichtet man hingegen auf eine oder mehrere hintere Führungsbüchsen für die Werkstoffstangen, um Platz für einen entsprechend kräftigeren Werkstoffschieber zu schaffen, so besteht die Gefahr, daß Werkstoffstangen geringen Durchmessers innerhalb der Arbeitsspindel ausknicken.

Der Erfindung liegt die Aufgabe zugrunde, bei einer Führungsvorrichtung der eingangs beschriebenen Gattung die Ursachen für solche Schwingungen des Werkstoffschiebers sowie die Gefahr des Ausknickens der Werkstoffstange innerhalb der Arbeitsspindel möglichst weitgehend zu beseitigen.

Die Aufgabe ist erfindungsgemäß dadurch gelöst, daß

- die am weitesten von der Spannvorrichtung entfernte, hintere Führungsbüchse eine von der Spannvorrichtung abgewandte Anschlagfläche für den Werkstoffschieber aufweist und

- mindestens diese hintere Führungsbüchse mittels des Werkstoffschiebers zusammen mit der Werkstoffstange gegen den Widerstand mindestens einer Feder in Richtung zur Spannvorrichtung hin axial verschiebbar ist.

Damit wird erreicht, daß der Werkstoffschieber bei fortgeschrittenem Verbrauch der Werkstoffstange gegen die Anschlagfläche der hinteren Führungsbüchse stößt und diese in dem Maß nach vorne verschiebt, in dem die Werkstoffstange weiter verbraucht und vorgeschoben wird. Dadurch wird der Abstand zwischen der hinteren Führungsbüchse und der Spannvorrichtung allmählich vermindert. Infolgedessen wird der hintere Abschnitt der Werkstoffstange immer besser und somit schwingungsfrei geführt; der Werkstoffschieber wird durch seine Anlage an der hinteren Führungsbüchse ebenfalls weitgehend schwingungsfrei gehalten. Deshalb neigen Werkstoffstange und Werkstoffschieber weniger zu Schwingungen als bei bekannten Führungsvorrichtungen der eingangs beschriebenen Gattung. Dies gilt weitgehend unabhängig davon, ob der Werkstoffschieber teleskopartig gestaltet ist oder nur eine einzige axial verschiebbare Stange aufweist.

Bei einer bevorzugten Ausführungsform der Erfindung ist die bzw. jede verschiebbare Führungsbüchse in einem Zwischenrohr geführt.

Diese Ausführungsform eignet sich besonders für eine Drehmaschine, bei der hinter der Arbeitsspindel in einem Zylinder ein Spannkolben zum Betätigen der Spannzange angeordnet ist. Für diesen Fall ist die Erfindung zweckmäßigerweise dadurch weitergebildet, daß das Zwischenrohr nach hinten aus der Arbeitsspindel herausragt und im Bereich des Spannkolbens endet.

Es ist ferner vorteilhaft, wenn die hintere Führungsbüchse in vom Werkstoffschieber unbelastetem Zustand teleskopartig nach hinten aus dem Zwischenrohr herausragt.

Schließlich ist es vorteilhaft, wenn das Zwischenrohr zusammen mit sämtlichen Führungsbüchsen und der zugehörigen mindestens einen Feder als einheitliche Baugruppe auswechselbar ist.

Ausführungsbeispiele der Erfindung werden im folgenden anhand schematischer Zeichnungen mit weiteren Einzelheiten erläutert. Es zeigt, jeweils im axialen Schnitt,

Fig.1 Teile einer Drehmaschine mit einer erfindungsgemäßen Führungs- und Vorschubvorrichtung in einer ersten Betriebsstellung,

Fig.2 die Führungs- und Vorschubvorrichtung in einer zweiten Betriebsstellung,

Fig.3 eine abgewandelte Führungs- und Vorschubvorrichtung in einer ersten Betriebsstellung und

Fig.4 die Vorrichtung gemäß Fig.3 in einer zweiten Betriebsstellung.

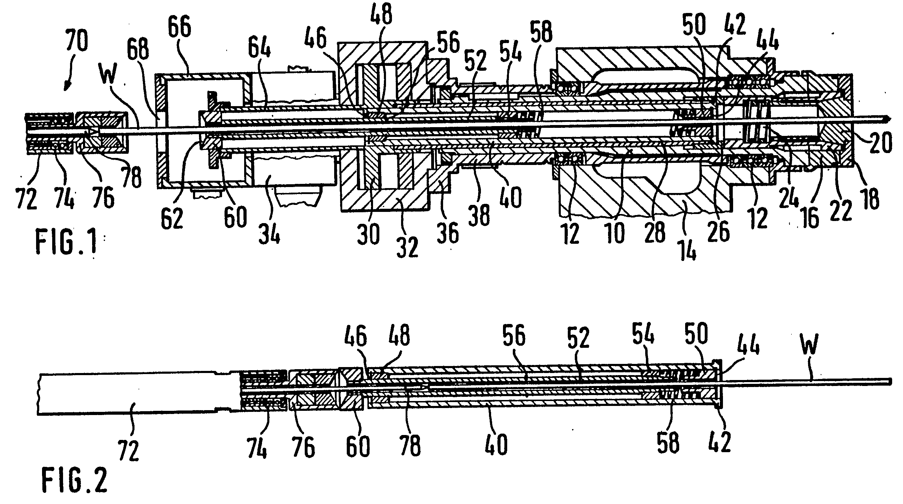

In Fig.1 ist eine hohle Arbeitsspindel 10 dargestellt, die zu einem Drehautomaten gehört und über mehrere Wälzlager 12 in einem Spindelstock 14 drehbar und axial unverschiebbar gelagert ist. Die Arbeitsspindel 10 hat ein in Fig. 1 rechts angeordnetes vorderes Ende, an dem über einen Zwischenring 16 ein vorderer Abschlußring 18 lösbar befestigt ist. Innerhalb des Zwischenrings 16 und des vorderen Endes der Arbeitsspindel 10 ist eine Spannvorrichtung angeordnet.

Zur Spannvorrichtung gehört eine Spannzange 20, die sich nach vorne am Abschlußring 18 abstützt. An der Spannzange 20 ist ein Außenkonus ausgebildet, der von einem entsprechenden Innenkonus einer Spannhülse 22 umschlossen ist. Die Spannhülse 22 ist vorne im Zwischenring 16 und hinten unmittelbar in der Arbeitsspindel 10 axial verschiebbar geführt und im Sinne einer Verschiebung nach hinten durch eine Druckfeder 24 belastet, die zwischen einer hinteren Stirnfläche der Spannzange 20 und einer entsprechenden Innenschulter der Spannhülse 22 eingespannt ist.

Durch die Arbeitsspindel 10, Spannhülse 22 und Spannzange 20 hindurch erstreckt sich eine Werkstoffstange W, von der ein vorderer Abschnitt nach vorne aus der Spannzange 20 herausragt, um bearbeitet zu werden. Während der Bearbeitung muß die Werkstoffstange in der Spannzange 20 möglichst fest eingespannt sein; zu diesem Zweck ist es erforderlich, daß die Spannhülse 22 mit einer axial nach vorne gerichteten Kraft belastet wird, die über die Konusflächen von Spannhülse 22 und Spannzange 20 in radial auf die Werkstoffstange W einwirkende Kräfte umgesetzt wird.

Zum Übertragen der axialen Spannkraft liegt am hinteren Ende der Spannhülse 22 eine ringförmige Kappe 26 an, die mit dem vorderen Ende eines Spannrohrs 28 verschraubt ist. Das Spannrohr 28 ist innerhalb der Arbeitsspindel 10 axial verschiebbar geführt und ist mit einem Spannkolben 30 verschraubt, der in einem hydraulischen Zylinder 32 arbeitet. Der Zylinder 32 ist hinten in einem ortsfesten Lagergehäuse 34 drehbar gelagert und vorne mit einem Flansch 36 einer verzahnten Hülse 38 verschraubt. Die verzahnte Hülse 38 umschließt die Arbeitsspindel 10, ist mit dieser zu gemeinsamer Drehung verbunden und von einem nicht dargestellten Zahnriemen umschlungen, über den sie angetrieben wird.

Innerhalb des Spannrohrs 28, und aus diesem teilweise nach hinten herausragend, ist ein Zwischenrohr 40 angeordnet, das an seinem vorderen Ende einen mittels der ringförmigen Kappe 26 am Spannrohr 28 befestigten Kragen 42 aufweist. In das vordere und hintere Ende des Zwischenrohrs 40 ist je ein Sicherungsring 44 bzw. 46 eingesetzt, von denen der hintere Sicherungsring 46 eine Ausdrehung im hinteren Endbereich des Zwischenrohrs 40 begrenzt und einen in dieser Ausdrehung aufgenommenen Gleitring 48 festhält. Am vorderen Sicherungsring 44 stützt sich eine innerhalb des Zwischenrohrs 40 aufgenommene Führungsbüchse 50 ab.

Im Zwischenrohr 40 ist ferner eine hintere Führungsbüchse 52 verschiebbar aufgenommen. Die hintere Führungsbüchse 52 hat die Form eines langgestreckten Rohrs und trägt nahe ihrem vorderen Ende einen Gleitring 54 sowie in ihrem mittleren Bereich einen Sicherungsring 56. Zwischen den beiden Führungsbüchsen 50 und 52 ist eine Feder 58 eingespannt, die gemäß Fig.1 bestrebt ist, die hintere Führungsbüchse 52 soweit nach hinten zu drücken, daß deren Sicherungsring 56 am Gleitring 48 anliegt.

Am hinteren Ende der hinteren Führungsbüchse 52 ist ein Anschlagring 60 befestigt, der an seiner Rückseite eine hohlkegelförmige Anschlag- und Zentrierfläche 62 aufweist und in einem rohrförmigen Fortsatz 64 des Spannkolbens 30 geführt ist. Rings um den Anschlagring 60 ist ortsfest ein Ölauffangbehälter 66 angeordnet, der ein zentrales Loch 68 aufweist.

Hinter dem Ölauffangbehälter 66 ist gleichachsig mit der Arbeitsspindel 10 ein Werkstoffschieber 70 angeordnet, von dem in Fig. 1 und 2 nur ein vorderer Endabschnitt dargestellt ist. Zum Werkstoffschieber 70 gehört ein rohrförmiges Schiebergehäuse 72, das axial verschiebbar, jedoch gegen Drehen festgehalten ist. Im Schiebergehäuse 72 ist mittels Wälzlagern 74 ein ebenfalls im wesentlichen rohrförmiger Außenschieber 76 drehbar gelagert. Im Außenschieber 76 ist ein stangenförmiger Innenschieber 78 verschiebbar geführt.

Fig. 1 zeigt den Werkstoffschieber 70 in einer stark vorgerückten Stellung, die er einnimmt, wenn die ursprünglich mehrere Meter lange Werkstoffstange W zum großen Teil verarbeitet worden ist. In dieser Stellung kann ein übliches, nicht dargestelltes Stangenmagazin, das beispielsweise Führungsbüchsen oder Rollensätze aufweist, die Werkstoffstange W nicht mehr führen und zentrieren. Deshalb bestünde die Gefahr, daß die Werkstoffstange W ausknickt, wenn sie nicht in verhältnismäßig geringem Abstand vom vorderen Ende des Werkstoffschiebers 70 durch die weit nach hinten reichende Führungsbüchse 52 geführt wäre. Wenn nun die vor der Spannzange 20 stattfindende Werkstückbearbeitung fortgesetzt wird und der Werkstoffschieber 70 die Werkstoffstange W dementsprechend weiter nach vorne schiebt, gelangt das vordere Ende des Außenschiebers 76 durch das Loch 68 in den Ölauffangbehälter 66 und stößt gegen die Anschlagfläche 62, die eine gewisse zentrierende Wirkung auf ihn ausübt.

Bei weiterer Vorwärtsbewegung schiebt der Werkstoffschieber 70 gegen den Widerstand der Feder 58 die hintere Führungsbüchse 52 nach vorne, bis diese ihre in Fig. 2 dargestellte Endstellung erreicht. Für die weitere Vorwärtsbewegung der Werkstoffstange W entsprechend der fortschreitenden Werkstückbearbeitung sorgt der Innenschieber 78, der gemäß Fig. 2 zunehmend aus dem Außenschieber 76 austritt. Dabei bleibt die Werkstoffstange W in den Führungsbüchsen 50 und 52 nahezu lückenlos geführt.

Wenn Werkstoffstangen eines anderen Durchmessers verarbeitet werden sollen, wird der Abschlußring 18 abgeschraubt und die Spannzange 20 samt Spannhülse 22 und Druckfeder 24 nach vorne herausgezogen. Die dadurch zugänglich werdende ringförmige Kappe 26 läßt sich mit einem Schraubendreher vom Spannrohr 28 abschrauben. Nun läßt sich das Zwischenrohr 40 samt beiden Führungsbüchsen 50 und 52 und Feder 58 als Baugruppe unzerlegt nach vorne aus dem Spannrohr 28 herausziehen oder von hinten her herausschieben und gegen eine entsprechende Baugruppe mit einem gleichen Zwischenrohr 40, jedoch an den neuen Werkstoffdurchmesser angepaßten Führungsbüchsen austauschen.

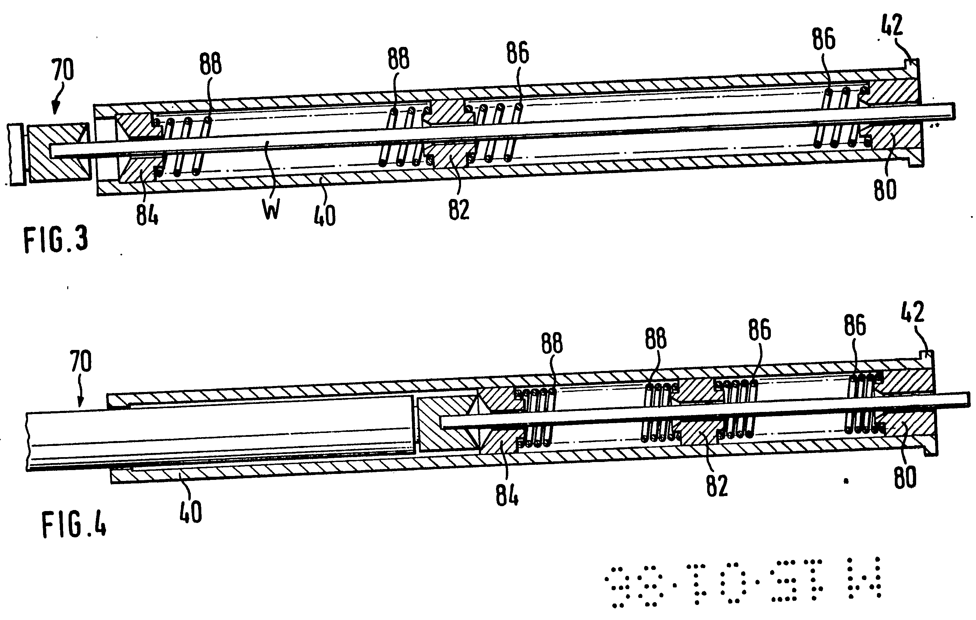

Bei der in Fig. 3 und 4 dargestellten Ausführungsform unterscheiden sich im wesentlichen nur innerhalb des Zwischenrohrs 40 angeordnete Teile von den in Fig. 1 und 2 dargestellten. Das Zwischenrohr 40 enthält gemäß Fig. 3 und 4 eine vordere Führungsbüchse 80, die in ihrer Anordnung und im wesentlichen auch in ihrer Gestaltung der Führungsbüchse 50 entspricht, sowie eine mittlere Führungsbüchse 82 und eine hintere Führungsbüchse 84, die gemeinsam die in Fig. 1 und 2 dargestellte Führungsbüchse 52 einschließlich deren Anschlagring 60 ersetzen.

Die Anschlagfläche 62 für den Werkstoffschieber 70 ist an der hinteren Führungsbüchse 84 ausgebildet, die im Gegensatz zur Führungsbüchse 52 in ihrer hinteren Endstellung nicht aus dem Zwischenrohr 40 herausragt. Die mittlere Führungsbüchse 82 ist an der vorderen Führungsbüchse 80 über eine Feder 86 abgestützt, und die hintere Führungsbüchse 84 ist an der mittleren Führungsbüchse 82 über eine Feder 88 abgestützt. Die beiden Federn 86 und 88 sind mit axialer Vorspannung eingebaute Druckfedern gleicher Charakteristik.

Der Werkstoffschieber 70 ist gemäß Fig. 3 und 4 nicht in Außen- und Innenschieber unterteilt und hat einen größten Außendurchmesser, der kleiner ist als der kleinste Innendurchmesser des Zwischenrohrs 40.

Wenn die Werkstoffstange W bei fortschreitendem Abarbeiten ihres vorderen Endes kürzer wird als in Fig. 3 dargestellt, dringt der Werkstoffschieber 70 in das Zwischenrohr 40 ein und stößt gegen die Anschlagfläche 62. Von nun an schiebt der Werkstoffschieber 70 die hintere Führungsbüchse 84 vor sich her, wobei die beiden miteinander in Kräftegleichgewicht stehenden Federn 86 und 88 gleichmäßig zusammengedrückt werden und infolgedessen die mittlere Führungsbüchse 82 sich derart vorwärtsbewegt, daß sie stets eine Mittelstellung zwischen den beiden anderen Führungsbüchsen 80 und 84 einnimmt. Dabei wird die Werkstoffstange W von allen drei Führungsbüchsen 80, 82 und 84 geführt, bis die Federn 86 und 88 vollständig zusammengedrückt sind. Der dann noch übrig bleibende Rest der Werkstoffstange W läßt sich nur unter der Voraussetzung verarbeiten, daß der in Fig. 3 und 4 dargestellte einfache Werkstoffschieber 70 durch einen gemäß Fig. 1 und 2 im Innen- und Außenschieber unterteilten Werkstoffschieber ersetzt wird.

**Patentansprüche**

1. Drehmaschine mit eine Führungs- und Vorschubvorrichtung für eine Werkstoffstange (W) mit
- einer hohlen Arbeitsspindel (10), die an einem Ende eine Spannvorrichtung (20) und in Abständen dahinter mindestens zwei Führungsbüchsen (50,52; 80,82, 84) für die Werkstoffstange (W) enthält, und
- einem Werkstoffschieber (70) zum Vorschieben der Werkstoffstange (W) in Richtung zur Spannvorrichtung (20), dadurch gekennzeichnet, daß
- die am weitesten von der Spannvorrichtung (20) entfernte, hintere Führungsbüchse (52; 84) eine von der Spannvorrichtung (20) abgewandte Anschlagfläche (62) für den Werkstoffschieber (70) aufweist und
- mindestens diese hintere Führungsbüchse (52; 84) mittels des Werkstoffschiebers (70) zusammen mit der Werkstoffstange (W) gegen den Widerstand mindestens einer Feder (58; 88) in Richtung zur Spannvorrichtung (20) hin axial verschiebbar ist.

2. Drehmaschine nach Anspruch 1, dadurch gekennzeichnet, daß die bzw. jede verschiebbare Führungsbüchse (52; 82, 84) in einem Zwischenrohr (40) geführt ist.

3. Drehmaschine Anspruch 2 oder bei der hinter der Arbeitsspindel (10) in einem Zylinder (32) ein Spannkolben (30) zum Betätigen der Spannzange (20) angeordnet ist, dadurch gekennzeichnet, daß das Zwischenrohr (40) nach hinten aus der Arbeitsspindel (10) herausragt und im Bereich des Spannkolbens (30) endet.

4. Drehmaschine nach Anspruch 2 oder 3, dadurch gekennzeichnet, daß die hintere Führungsbüchse (52) in vom Werkstoffschieber (70) unbelastetem Zustand teleskopartig nach hinten aus dem Zwischenrohr (40) herausragt.

5. Drehmaschine nach einem der Ansprüche 2 bis 4, dadurch gekennzeichnet, daß das Zwischenrohr (40) zusammen mit sämtlichen Führungsbüchsen (50, 52; 80, 82, 84) und der zugehörigen mindestens einen Feder (58; 86, 88) als einheitliche Baugruppe auswechselbar ist.

**Claims**

1. A turning lathe comprising a guiding and feeding device for a work bar (W), comprising
- a hollow spindle (10) which includes a chuck (20) at one end and behind the same and spaced from each other at least two guide sleeves (50, 52; 80, 82, 84) for the work bar (W), and
- a stock feeder (70) for advancing the work bar (W) in a direction toward the chuck (20), characterized in that
- the rear guide sleeve (52; 84) most remote from the chuck (20) has an abutment face (62) for the stock feeder (70), and
- at least this rear guide sleeve (52; 84) is axially displaceable in a direction toward the chuck (20) by means of the stock feeder (70) together with the work bar (W) against the resistance of at least one spring (58; 88).

2. The turning lathe as claimed in claim 1, characterized in that the or each displaceable guide sleeve (52; 82, 84) is guided in an intermediate tube (40).

3. The turning lathe as claimed in claim 2, in which a gripping piston (30) is arranged in a cylinder (32) behind the spindle (10) for actuating the collet (20), characterized in that the intermediate tube (40) projects rearwardly out of the spindle (10) and ends in the range of the gripping piston (30).

4. The turning lathe as claimed in claim 2 or 3, characterized in that the rear guide sleeve (52) projects telescopically to the rear out of the intermediate tube (40) when not loaded by the stock feeder (70).

5. The turning lathe as claimed in one of claims 2 to 4, characterized in that the intermediate tube (40) together with all guide sleeves (50, 52; 80, 82, 84) and the associated at least one spring (58; 86, 88) are exchangeable as a uniform assembly.

**Revendications**

1. Tour équipé d'un dispositif de guidage et d'avance agissant sur une barre de matière (W), comprenant:
- une broche de travail creuse (10) qui comporte à une extrémité un dispositif de serrage (20) et, à différentes distances en arrière de ce dispositif, au moins deux douilles de guidage (50, 52; 80, 82, 84) servant à guider la barre de matière (W), et
- un poussoir de matière (70) servant à pousser la barre de matière (W) vers l'avant, en direction du dispositif de serrage (20), caractérisé en ce que
- la douille de guidage arrière (52; 84) qui est la plus éloignée du dispositif de serrage (20) présente une surface de butée (62), destinée à arrêter le poussoir de matière (70), qui tourne le dos au dispositif de serrage (20), et
- au moins cette douille de guidage arrière (52; 84) peut être poussée axialement vers le dispositif de serrage (20) au moyen du poussoir de matière (70), conjointement avec la barre de matière (W), et à l'encontre de la force d'au moins un ressort (58; 88).

2. Tour selon la revendication 1, caractérisé en ce que la douille de guidage ou chaque douille de guidage mobile en translation (52, 82, 84) est guidée dans un tube intermédiaire (40).

3. Tour selon la revendication 2, dans lequel il est prévu un piston de serrage (30) dans un cylindre (32) en arrière de la broche de travail (10), pour l'actionnement de la pince de serrage (20), caractérisé en ce que le tube intermédiaire (40) fait saillie en arrière de la broche de travail (10), et se termine dans la région du piston de serrage (30).

4. Tour selon la revendication 2 ou 3, caractérisé en ce que lorsqu'elle n'est pas chargée par le poussoir de matière (70), la douille de guidage arrière (52) émerge télescopiquement du tube intermédiaire (40) vers l'arrière.

5. Tour selon l'une des revendications 2 à 4, caractérisé en ce que le tube intermédiaire (40), avec toutes les douilles de guidage (50, 52; 80, 82, 84) et le ressort ou les ressorts correspondants (58; 86, 88), peut être remplacé comme un sous-ensemble d'un seul tenant.

FIG.1

FIG.2

FIG.3

FIG.4

0 182 833